# EUROPEAN PATENT APPLICATION

(11) **EP 1 550 695 A1**
(43) Date of publication of application: **06.07.2005**
(21) Application number: 03748650.3
(22) Date of filing: 01.10.2003
(51) Int. Cl.: C08L 67/02, C08G 18/42, C09J 175/06

(54) **POLYOL MIXTURE, REACTIVE HOT-MELT COMPOSITION OBTAINED FROM THE MIXTURE, AND MOLDED ARTICLE OBTAINED WITH THE COMPOSITION**

(30) Priority: 01.10.2002 JP 2002288486
(71) Applicant: Ube Industries, Ltd., Ube-Shi, Yamaguchi 755-8633 (JP); Sanyo Electric Co., Ltd., Moriguchi-shi, Osaka 570-8677 (JP)
(72) Inventor: ICHIHASHI, Hideki Ube Research Laboratory, Ube-shi, Yamaguchi 755-8633 (JP); KANEKO, Yukio Ube Research Laboratory, Ube-shi, Yamaguchi 755-8633 (JP); KASHIWAGI, Kohichi Ube Chemical Factory, Ube-shi, Yamaguchi 755-8633 (JP); MORIKAMI, Atsushi Ube Chemical Factory, Ube-shi, Yamaguchi 755-8633 (JP); WATANABE, Atsushi Sanyo Electric Co., Ltd., Moriguchi-shi, Osaka 570-8677 (JP)
(74) Representative: HOFFMANN - EITLE
(86) International application number: PCT/JP2003/012594
(87) International publication number: WO 2004/031296

(57) **Abstract**

The present invention relates to a polyol mixture containing
(1) 10 to 97% by weight of a crystalline polyester polyol produced by an aliphatic dicarboxylic acid and an aliphatic diol as main components,
(2) 0 to 45% by weight of a polyester polyol produced by an aromatic polycarboxylic acid and an aliphatic polyol as main components, and
(3) 3 to 45% by weight of a polycarbonate polyol, and a reactive hot melt composition obtained by reacting the polyol mixture and the polyisocyanate, and a molded product using the reactive hot melt composition.

## Description

### TECHNICAL FIELD

The present invention relates to a polyol mixture containing an aliphatic polyester polyol, an aromatic polyester polyol and a polycarbonate polyol and a reactive hot melt composition obtained by said mixture, and a molded product using said composition.

### BACKGROUND ART

A reactive hot melt adhesive has been rapidly grown since it is excellent in strength and an adhesion speed, has high line adaptability in assembly industry, and also is adapted to social demand that requires solvent-free and energy saving. Accompanied with this, demand of improvement in continuous workability is high and a reactive hot melt adhesive having more rapid curing speed has been desired.

To comply with these demands, it has been known that crystallinity of a polyester polyol affects to the curing speed. That is, to improve curing speed, it is extremely advantageous to use a polyester polyol having high crystallinity. (see, for example, "Technology on Adhesion & Sealing" 1984, vol. 28, No. 8, p.5 and "ADHESIVES AGE" 1987, November, p.32)

As the starting materials for these polyester polyol, it has been known, as the polyvalent carboxylic acid component, terephthalic acid, isophthalic acid, succinic acid, adipic acid, azelaic acid, sebacic acid, dodecanedioic acid, etc., and as the diol component, ethylene glycol, propylene glycol, 1,4-butanediol, 1,5-pentanediol, 1,6-hexanediol, 1,4-cyclohexanedimethanol, and the like.

Among the polyester polyols obtained by a combination of these monomers, as production starting materials of a reactive hot melt adhesive having improved curing speed, those using dodecanedioic acid and 1,6-hexanediol, those using sebacic acid and 1,6-hexanediol, a polyester polyol using dodecanedioic acid and ethylene glycol, are disclosed. (see, for example, Japanese Unexamined Patent Publication No. Hei. 2-88686 (pp. 4-6).)

Also, it has been disclosed that a reactive hot melt adhesive obtained by the reaction of a polycarbonate series polyol and a polyisocyanate is improved in initial adhesion force and heat-resistant adhesion force, and excellent in heat stability and humidity resistance (or water resistance). (see, for example, Japanese Unexamined Patent Publication No. Hei. 2-305882 (pp. 7-8).)

Also, a molding method is disclosed in which a moisture-curing polyurethane hot melt type adhesive is used as a molding raw material for the production of a molded product, and the molding raw material is melted under heating, injected into a closed mold under a pressure of 0.1 to 5 MPa, and cooling to solidify the molded product, which is taken out from the mold within a short period of time and exposed to air moisture to be cured. Its great economical and technical merits are a markedly lowered pressure at processing, relatively simple device and means, and good adhesion to various kinds of substrates. Moreover, there are disclosed that this molded product is temperature resistant and adheres to various kinds of substrates, and they are particularly suitable for production of electric constitutional members. (see, for example, Japanese PCT Unexamined Patent Publication No. Hei. 10-511716 (pp. 16-18).)

However, in these reports, there is no description about adhesive property to a metal, particularly to aluminum, and the adhesive property was insufficient when these materials were practically examined. At present, in the field of semiconductor parts or in the field of electric parts constitution, demand to produce a product integrated with a metal part, in particular, a product integrated with a light-weighted aluminum metal has increased, and a reactive hot melt composition having both of a rapid solidification rate which relates to the production, and low melting viscosity and strong adhesion strength to a metal portion, particularly to aluminum which relates to handling property at the production has been earnestly required.

In the present invention, a used ratio of a crystalline polyester polyol, an aromatic polyester polyol and a polycarbonate polyol is investigated to solve the above-mentioned problems, and an object thereof is to provide a polyol mixture suitable therefore and a reactive hot melt composition obtained from said mixture, particularly excellent in adhesive property to aluminum, and a molded product using the composition.

### DISCLOSURE OF THE INVENTION

The present inventors have earnestly studied to solve the above-mentioned problems, and as a result, they have found that the problems can be solved by the following compositions to accomplish the present invention.

That is, the polyol mixture of the present invention comprises
(1) 10 to 97% by weight of a crystalline polyester polyol produced by an aliphatic dicarboxylic acid and an aliphatic diol as main components,
(2) 0 to 45% by weight of a polyester polyol produced by an aromatic polycarboxylic acid and an aliphatic polyol as main components, and
(3) 3 to 45% by weight of a polycarbonate polyol,
   a reactive hot melt composition of the present invention comprises one obtained by reacting the above-mentioned polyol mixture and a polyisocyanate, and further, a molded product obtained by using the composition can be provided.

More specifically, easiness in handing at the time of use and control of an adhesion time are considered, and thus, a reactive hot melt composition particularly excellent in adhesion strength of electric circuit parts and aluminum substrate, a polyol mixture for producing said composition, and a molded product obtained by using said composition are provided.

It is preferably provided a mixture comprising a straight aliphatic polyester polyol produced by using an aliphatic dicarboxylic acid such as dodecanedioic acid, adipic acid, etc. and 1,6-hexanediol as main components, an aromatic polyester polyol produced by using an aromatic polycarboxylic acid such as o-, m-, p-phthalic acid, etc. and a polyol such as 1,6-hexanediol, etc. as main components, and a polycarbonate polyol produced by using a polyol such as 1,6-hexanediol, etc., and a reactive hot melt composition obtained from said mixture and a molded product using said composition.

### BEST MODE FOR CARRYING OUT THE INVENTION

In the following, the present invention is explained in more detail.
(1) The crystalline polyester polyol produced by an aliphatic dicarboxylic acid and an aliphatic diol as main components to be used in the present invention means a crystalline polyester polyol obtained by an aliphatic dicarboxylic acid and an aliphatic diol.
   Such a crystalline polyester polyol preferably includes a crystalline polyester polyol obtained by a straight aliphatic dicarboxylic acid having 6 to 12carbon atoms and a straight aliphatic diol having 2 to 12carbon atoms. Specific examples of the dicarboxylic acid may be mentioned adipic acid, azelaic acid, sebacic acid, decanedioic acid and dodecanedioic acid, and specific examples of the diol may be mentioned ethylene glycol, 1,4-butanediol, 1,6-hexanediol, 1,10-decanediol and 1,12-dodecanediol.
   The dicarboxylic acid and the diol of the present invention may be used each alone or in a mixture without any problem. Also, they may be a mixture of the polyester polyol obtained as mentioned above without any problem.
   Also, the terms that "it is produced by using the aliphatic dicarboxylic acid and the aliphatic diol as main components" mean that the crystalline polyester polyol obtained by these aliphatic dicarboxylic acid and aliphatic diol is contained in an amount of 50% by weight or more, preferably 70% by weight or more, more preferably 80% by weight or more based on the total weight of the whole polyester polyol, and other component(s) may be mentioned a polycarbonate polyol, a polylactone polyol or a polylether polyol.
   As the polycarbonate polyol to be used, there may be mentioned a polycarbonate diol comprising a linear aliphatic diol such as 1,6-hexanediol, 1,5-pentanediol, 1,4-butanediol, etc. as a component. As the polylactone polyol to be used, there may be mentioned, for example, a polycaprolactone polyol obtained by ring-opening polymerization of a caprolactone monomer. Also, as the polylether polyol to be used, there may be mentioned, for example, a polyethylene glycol, a polypropylene glycol, and a polytetramethylene glycol.
   Also, the term "crystalline" in the present invention means a property solely evaluated (for example, see "X-ray diffraction of Polymer", written by L. E. Alexander, authored and translated by Ichiro Sakurada, Kagaku Dojin, 1972, p. 125) in crystallinity by X-ray diffraction method (Ruland method) of a polyester polyol which is cooled and solidified from a melting state with a cooling rate of 10°C/min, and the material is those having the crystallinity of 20% or more. Preferred are those having crystallinity of 30% or more. Particularly preferred are those having crystallinity of 40% or more. If the crystallinity is less than 20%, a solidification time of the produced reactive hot melt composition tends to be long so that it is not preferred.
(2) The polyester polyol produced by an aromatic polycarboxylic acid and an aliphatic polyol as main components means a polyester polyol obtained from an aromatic polycarboxylic acid and an aliphatic polyol.
   The terms "aromatic polycarboxylic acid" mean a compound having at least two carboxyl groups on the aromatic ring, and the preferred aromatic polycarboxylic acid is an aromatic polycarboxylic acid having 8 to 20 carbon atoms. More specifically, there may be mentioned phthalic acid, isophthalic acid and terephthalic acid, trimellitic acid, pyromellitic acid and biphenyldicarboxylic acid. The aromatic polycarboxylic acid may be used in the form of a derivative such as a polyalkyl ester, a polyaryl ester or an acid anhydride thereof. It is preferably phthalic acid, isophthalic acid and terephthalic acid, and dialkyl ester compounds or diaryl ester compounds thereof and a phthalic acid anhydride. These aromatic polycarboxylic acids and derivatives thereof may be used singly or may be used in admixture without any problems.
   Incidentally, an alkyl group of the polyalkyl ester is not specifically limited, and preferably an aliphatic saturated hydrocarbon group having 1 to 8 carbon atoms, more specifically, a methyl group, an ethyl group, a propyl group, and a butyl group. The aryl group of the polyaryl ester is also not specifically limited, and there may be preferably mentioned an aromatic hydrocarbon group having 6 to 12 carbon atoms, more specifically a phenyl group, a tolyl group, and a chlorophenyl group.
   The aliphatic polyol means an aliphatic hydrocarbon compound having at least two hydroxyl groups in the molecule, preferred aliphatic polyol may be mentioned an aliphatic polyol having 2 to 12 carbon atoms, more specifically, there may be mentioned ethylene glycol, 1,3-propanediol, 1,4-butanediol, 1,5-pentanediol, neopentyl glycol, 1,6-hexanediol, 1,10-decanediol, 1,12-dodecanediol, 2,2-diethylpropanediol, 2-ethyl-2-butylpropanediol, trimethylolethane, trimethylolpropane, cyclohexanedimethanol. Preferably mentioned are ethylene glycol, 1,3-propanediol, 1,4-butanediol, 1,5-pentanediol, neopentyl glycol, 1,6-hexanediol, 1,10-decanediol and 1,12-dodecanediol, more preferably ethylene glycol, 1,4-butanediol, neopentyl glycol and 1,6-hexanediol.
   Moreover, the aliphatic polyol may be a diethylene glycol, triethylene glycol, tetraethylene glycol, 1,4-bis(β-hydroxyethoxy)benzene, etc. in which a part of the carbon atoms is/are replaced with an oxygen atom(s) or an aromatic ring(s). These aliphatic polyols may be used alone or in admixture without any problems.
   Also, it may contain an oxy acid having 2 to 12 carbon atoms such as hydroxypivalic acid, etc., as a constitutional component.
   Moreover, it may be a mixture of the polyester polyols obtained from these aromatic polycarboxylic acids and aliphatic polyols without any problems.
   The terms "prepared from an aromatic polycarboxylic acid and an aliphatic polyol as main components" mean that a used molar number of the aromatic polycarboxylic acid occupies 50 mol% or more based on the total molar number of the whole polycarboxylic acids, preferably 60 mol% or more, more preferably 70 mol% or more, and as the other dicarboxylic acid, there may be mentioned an aliphatic polycarboxylic acid. Here, the aliphatic polycarboxylic acid is a carboxylic acid having 4 to 12 carbon atoms. Specifically, there may be mentioned adipic acid, and as the preferred aromatic polycarboxylic acid containing the compound, there may be mentioned a combination of phthalic acid and adipic acid. The corresponding aliphatic polyol is preferably mentioned ethylene glycol and neopentyl glycol.
   The polyester polyol of (1) and (2) can be obtained from an aliphatic dicarboxylic acid and an aliphatic diol, and from an aromatic polycarboxylic acid and/or its polyalkyl ester and/or its aryl ester and/or its acid anhydride and an aliphatic polyol, by subjecting to the conventionally known polycondensation. In general, an equivalent ratio (hydroxyl group/carboxyl group) of the hydroxyl group of the aliphatic diol or the aliphatic polyol and the carboxyl group of the aliphatic dicarboxylic acid and/or the aromatic polycarboxylic acid (and/or its derivative) is preferably 1.02 to 1.5, more preferably 1.05 to 1.3. More specifically, predetermined amounts of the aliphatic dicarboxylic acid and the aliphatic diol or the aromatic polycarboxylic acid and the aliphatic polyol are subjected to polycondensation in the presence or absence of a catalyst at a temperature range of 150 to 250°C or so for 1 to 50 hours or so, whereby esterification or ester exchange is carried out.
   As the catalyst to be used at this time, there may be mentioned, for example, a titanium series catalyst such as titanium tetrabutoxide, etc., a tin series catalyst such as dibutyl tin oxide, etc., and when the polycondensation is carried out in the presence of such a catalyst, then the polycondensation is promoted so that it is preferred. The catalyst may be charged with the aliphatic diol and the aliphatic dicarboxylic acid, or with the aliphatic polyol and the aromatic polycarboxylic acid, or after subjecting to pre-polymerization in the absence of a catalyst, then the catalyst may be added. For the production of the polyester polyol, it is desirable to be the both ends substantially hydroxyl group, and not cause a carboxylic acid end. For this purpose, it is particularly effective to carry out the pre-polymerization, and then, the above-mentioned catalyst is added.
   A number average molecular weight of the polyester polyol of (1) and (2) is preferably a polyester polyol having 500 to 20000, further preferably 1000 to 15000, particularly preferably 1500 to 10000. If it is less than the above range, heat resistance, chemical resistance or strength at the initial stage and at the time of curing tend to be insufficient. If it is larger than the above range, a viscosity at the time of melting tends to be high whereby operation tends to be difficult in some cases.
(3) The polycarbonate polyol to be used in the present invention is a material obtained by condensation of the conventionally known polyol (polyvalent alcohol: an organic compound having at least two hydroxyl groups in the molecule) and phosgene, a chloroformate, dialkylcarbonate or diarylcarbonate, and those having various molecular weights have been known. Such a polycarbonate polyol may be mentioned, as the polyol, aliphatic polyol, cyclic aliphatic polyol, aromatic polyol, etc. Specifically, those using 1,6-hexanediol, 1,4-butanediol, 1,3-butanediol, 1,3-propanediol, neopentyl glycol, 1,5-pentanediol, 1,8-nonanediol, 1,9-nonanediol, 2,2-diethylpropanediol, 2-ethyl-2-butyl-1,3-propanediol, trimethylolethane, trimethylolpropane, cyclohexanedimethanol or bisphenol A, preferably those containing 1,6-hexanediol.

Also, the polyol may be a material in which the carbon atoms are partially replaced by an oxygen atom or an aromatic ring, such as diethylene glycol, triethylene glycol, tetraethylene glycol, 1,4-bis(β-hydroxyethoxy)-benzene, 2,2-bis(4-hydroxyethoxyphenylpropane, etc.

These polyols may be used alone or in combination of two or more. Also, the respective polycarbonate polyols may be carried out random or block copolymerization.

A number average molecular weight of the polycarbonate polyol is preferably 300 to 20000, more preferably 400 to 10000, further preferably 500 to 5000. If it is less than the above range, crystallinity is low, and if it is larger than this range, a viscosity at the time of melting tends to be high in some cases.

A polyol mixture in which a suitable amount of the polycarbonate polyol is combined with the polyester polyol of (1) and (2), and a reactive hot melt composition obtained by reacting the polyisocyanate heightens initial adhesive strength to a material to be adhered, in particular to aluminum, and by adjustment of the molecular weight and the formulation ratio, it is possible to have a suitable viscosity as a composition for molding.

A formulation ratio to be used in the respective components of (1) the crystalline polyester polyol produced by reacting the aliphatic dicarboxylic acid and the aliphatic diol as main components, (2) the polyester polyol produced by reacting the aromatic polycarboxylic acid and the aliphatic polyol as main components and (3) the polyol mixture containing the polycarbonate polyol to be used in the present invention is,
(1) 10 to 97% by weight of a crystalline polyester polyol produced by an aliphatic dicarboxylic acid and an aliphatic diol as main components,
(2) 0 to 45% by weight of a polyester polyol produced by an aromatic polycarboxylic acid and an aliphatic polyol as main components, and
(3) 3 to 45% by weight of a polycarbonate polyol, preferably

(1) 30 to 90% by weight of a crystalline polyester polyol produced by an aliphatic dicarboxylic acid and an aliphatic diol as main components,
(2) 5 to 30% by weight of a polyester polyol produced by an aromatic polycarboxylic acid and an aliphatic polyol as main components, and
(3) 5 to 40% by weight of a polycarbonate polyol. If an amount of (1) the crystalline polyester polyol produced by using the aliphatic dicarboxylic acid and the aliphatic diol as main components is less than 10% by weight, it takes a long time for adhesion by solidifying the melted reactive hot melt composition. Also, if it is contained more than 97% by weight, an adhesion time is extremely short, and an initial adhesive property of a material to be adhered, in particular aluminum becomes poor so that it is not preferred.
(2) The polyester polyol produced by using the aromatic polycarboxylic acid and the aliphatic polyol as main components may not be used in some cases, but for the purpose of adjusting strength of the reactive hot melt composition, it is used within the range of 0 to 45% by weight. If it is more than 45% by weight, crystalline of the composition is lowered or there is a possibility of causing problem in workability in some cases so that it is not preferred.
(3) The polycarbonate polyol is less than 3% by weight, adhesive property at the initial stage is poor. Also, if it is used more than 45% by weight, crystallinity of the composition is lowered so that it is not preferred.

In the present invention, in some cases, other polyol which is not included in the above-mentioned (1), (2) and (3) may be mixed with the above-mentioned polyol mixture in a small amount without problem. The polyol other than the above-mentioned (1), (2) and (3) may be mentioned a polylactone polyol or a polyether polyol.

As the usable polylactone polyol, there may be mentioned, for example, polycaprolactone polyol obtained by ring-opening polymerization of caprolactone monomers. Also, as the usable polyether polyol, there may be mentioned, for example, polyethylene glycol, polypropylene glycol, and polytetramethylene glycol.

A ratio of mixing these materials is desirably 50 parts by weight or lower based on (1)+(2)+(3)=100 parts by weight, preferably 40 parts by weight or lower, more preferably 30 parts by weight or lower. If the other polyol is mixed in excess of this range, crystallinity is lowered so that it is not preferred.

The polyisocyanate to be used in the present invention is generally known aromatic, aliphatic and/or cyclic aliphatic diisocyanates or polyfunctional or high molecular weight polyisocyanate, preferably an aromatic diisocyanate. More specifically, there may be mentioned 1,5-naphthylene diisocyanate, 4,4'-diphenylmethane diisocyanate, 4,4'-diphenyldimethylmethane diisocyanate, 4,4'-dibenzyldiisocyanate, tetraalkyldiphenylmethane diisocyanate, 1,3-phenylenediisocyanate, 1,4-phenylenediisocyanate, tolylene diisocyanate, butane-1,4-diisocyanate, hexamethylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, dicyclohexylmethane-4,4'-diisocyanate, 1,3-bis(isocyanatemethyl)cyclohexane, methylcyclohexane diisocyanate and their derivatives, preferably 4,4'-diphenylmethanediisocyanate.

Usable ranges of the polyol mixture and the polyisocynanate of the present invention are not specifically limited and used within usual ranges. That is, a molar ratio of the OH group of the polyol mixture to the NCO group of the polyisocyanate is 1:1.2 to 1:3.5, preferably 1:1.5 to 1:3.0, further preferably 1:1.7 to 1:2.5. The reaction conditions are not specifically limited, and carried out within the usual range. More specifically, it is carried out at a temperature range of 50 to 150°C, preferably at 70 to 140°C, for 0.5 to 10 hours or so. Incidentally, the reaction may be carried out in a solvent. Moreover, if necessary, a catalyst including a transition metal compound catalyst such as titanium tetrabutoxide, dibutyltin oxide, dibutyltin dilaurate, tin 2-ethylcaproate, zinc naphthenate, cobalt naphthenate, zinc 2-ethylcaproate, molybdenum glycolate, iron chloride, zinc chloride, etc, or an amine catalyst such as triethylamine, tributylamine, triethylenediamine, benzyldibutylamine, etc. may be added. The reaction is generally carried out under an inert gas atmosphere such as nitrogen, argon, etc., and it may be carried out without any problem so long as it is the conditions in which water content is not migrated such as under dry air atmosphere or a closed system condition.

A viscosity of the reactive hot melt composition obtained in the present invention is preferably 100000 cps or less, more preferably 100 to 50000 cps, further preferably 200 to 40000 cps or less, most preferably 500 to 7000 cps or less at 120°C.

The reactive hot melt composition of the present invention can be used as such, and a plasticizer, a thermoplastic polymer, a tackifier, an aging-preventive agent, etc. which are used for usual hot melt composition may be added and used. Also, a colorant or a filler to be generally used for a resin for molding may be used.

The reactive hot melt composition obtained by the present invention is not only for use for usual hot melt adhesive, but also it gives excellent adhesion to metal (more specifically, there may be mentioned copper, magnesium and aluminum, preferably aluminum) and can control an adhesion time, so that it is suitable for adhesion processing in continuous working or molding processing such as encapsulating working, etc. For example, there may be mentioned fields of shoemaking industry, wood processing industry, building materials industry, book binding industry, metal industry, resin processing industry, automobile producing industry, electric and electronic parts producing industry, and semiconductor parts producing industry, and products produced in these industry fields become molded products. As the specific molded products in the electric and electronic parts production industry and semiconductor parts production industry, there may be mentioned a semiconductor encapsulating product and a circuit board, an element, a switch, a wiring, a plug connector, a display device, electric and electronic parts into which a battery is inserted, encapsulated by a reactive hot melt composition to integrally constituted, and electric and electronic products such as a computer, video, camera, game machine, television, radio or mobile phone parts, etc.

Also, the reactive hot melt composition obtained by the present invention can form a molded product only by using the reactive hot melt composition without using an inserting material of parts or without carrying out adhesion or encapsulation.

A processing temperature of the reactive hot melt composition obtained by the present invention is at least a melting point or higher of the reactive hot melt composition to be used, preferably 70 to 200°C, further preferably 90 to 170°C. If it is a temperature lower than the melting point, processing efficiency is poor, while the processing temperature is too high, modification of the reactive hot melt composition sometimes occurs so that it is not preferred.

Also, when the reactive hot melt composition obtained by the present invention is used for molding processing, it is not specifically limited, and a usual injection molding machine or an applicator can be used.

There is no limitation in injection molding method. As one of examples, the reactive hot melt composition is melted at a temperature of 70 to 200°C, the melted material is injected in a closed mold under an excessive pressure of 0.1 to 5 MPa, cooled molded product is taken off from the mold within a short period of time, and then, cured by moisture in the air. Also, in the closed mold, it is possible to insert a part before molding in the above-mentioned industrial fields as a part for adhesion or encapsulation.

### EXAMPLES

In the following, the present invention is specifically explained by referring to Examples, but the present invention is not limited by these.

### Analytical method

### (1) Hydroxyl group value, acid value and number average molecular weight

A hydroxyl group value and an acid value of the polyester polyol were measured according to JIS K 1557, and a number average molecular weight was calculated from the hydroxyl group value.

### (2) Melting point and crystallization temperature

A melting point and crystallization temperature of the polyester polyol were obtained from temperatures of the maximum heat-absorption peak and heat-releasing peak in a differential scanning calorimetry (DSC). Measurement by DSC was carried out with a heating rate of 10°C/min and cooling rate of -10°C/min.

### (3) Crystallinity

crystallinity is a value measured and calculated by X-ray diffraction method (Ruland method) in which the produced polyester polyol was melted at a temperature of the melting point or higher, cooled from this state with a rate of 10°C/min and solidified, and then, powdered, which was then measured.

### Example 1

In a separable flask were charged 70 parts by weight of a polyester polyol (hereinafter referred to as ETERNACOLL 3010) comprising 1,6-hexanediol and dodecanedioic acid and having an average molecular weight of 3600 available from Ube Industries, Ltd. and 30 parts by weight of a polycarbonate polyol (hereinafter referred to as UH-CARB 100) comprising 1,6-hexanediol and dimethylcarbonate and having an average molecular weight of 1000 available from Ube Industries, Ltd., atmosphere of which was replaced by nitrogen, and the mixture was melted at 120°C. Moreover, while stirring at 250 rpm, dehydration treatment of the material was carried out at 120°C, 50 mmHg for 1 hour, and atmosphere of which was replaced by nitrogen for 10 minutes. Thereafter, 4,4-diphenylmethanediisocyanate (hereinafter referred to as MDI) (1.1-fold mol based on the OH group of the charged polyester polyol mixture) previously heated to 60°C was added to the mixture at once, and the mixture was further stirred under nitrogen atmosphere, at 120°C, for 1.5 hours to synthesize a reactive hot melt composition.

With regard to the obtained reactive hot melt composition, according to the following physical property measurement method, measurements of a melting point, crystallization temperature, melting viscosity, open time, set time, and initial adhesive property were carried out. The results are shown in Table 1.

### Physical property measurement method

(1) Melting point: A temperature at a melting peak by DSC measurement was obtained as a melting point. Measurement conditions of DSC were a temperature raising rate of 10°C/min and a temperature was raised from -100°C to 100°C.
(2) Crystallization temperature: A temperature at a crystallization peak by DSC measurement was obtained as a crystallization temperature. Measurement conditions of DSC were a temperature raising rate of 10°C/min and a temperature was cooled from 100°C to -100°C.
(3) Melting viscosity: The sample was melted at 120°C, and measured by a B-type viscometer.
(4) Open time: The reactive hot melt composition melted at 120°C was coated on an aluminum plate with a thickness of 1.6 mm with a size of a diameter of about 2 cm and a thickness of about 2 mm, and allowing to stand for cooling at room temperature to measure a time until the reactive hot melt composition was solidified. The experiment was carried out at a room temperature of 23°C.
(5) Set time: The reactive hot melt composition melted at 120°C was coated on an aluminum plate with a thickness of 1.6 mm with a size of a diameter of about 2 cm and a thickness of about 2 mm, and another aluminum plate was overlapped thereon and clamped, and a time for solidification was measured. The experiment was carried out at a room temperature of 23°C.
(6) Adhesive property: The reactive hot melt composition melted at 120°C was coated on an aluminum plate with a thickness of 1.6 mm with a size of a diameter of about 2 cm and a thickness of about 2 mm, and allowing to stand for cooling at room temperature to solidify the hot melt. After allowing to stand for 10 minutes, a force was provided to the edge portion of the solidified reactive hot melt composition with a tip of a spatula to peel off the aluminum plate and the reactive hot melt composition so that an adhesive property was examined. At this time, spontaneous peeling occurred after allowing to stand was evaluated to as ×, that peeled with a light force was Δ, that peeled with a strong force was ○, that does not peeled even when the reactive hot melt composition was deformed was ⓞ.

### Examples 2 to 8

Reactive hot melt compositions were synthesized by the same operation except for using the polyester polyol and the polycarbonate polyol shown in Table 1 in place of 70 parts by weight of ETERNACOLL 3010 and 30 parts by weight of UH-CARB 100 in Example 1.

Evaluations of physical properties of the obtained adhesive were shown in Table 1.

### Comparative examples 1 to 5

Reactive hot melt compositions were synthesized by the same operation except for using the materials shown in Table 1 in place of 70 parts by weight of ETERNACOLL 3010 and 30 parts by weight of UH-CARB 100 in Example 1.

Evaluations of physical properties of the obtained adhesive were also shown in Table 1.

Compositions of Examples 1 to 8 and Comparative examples 1 to 5 and Evaluations of physical properties thereof are shown in Table 1.

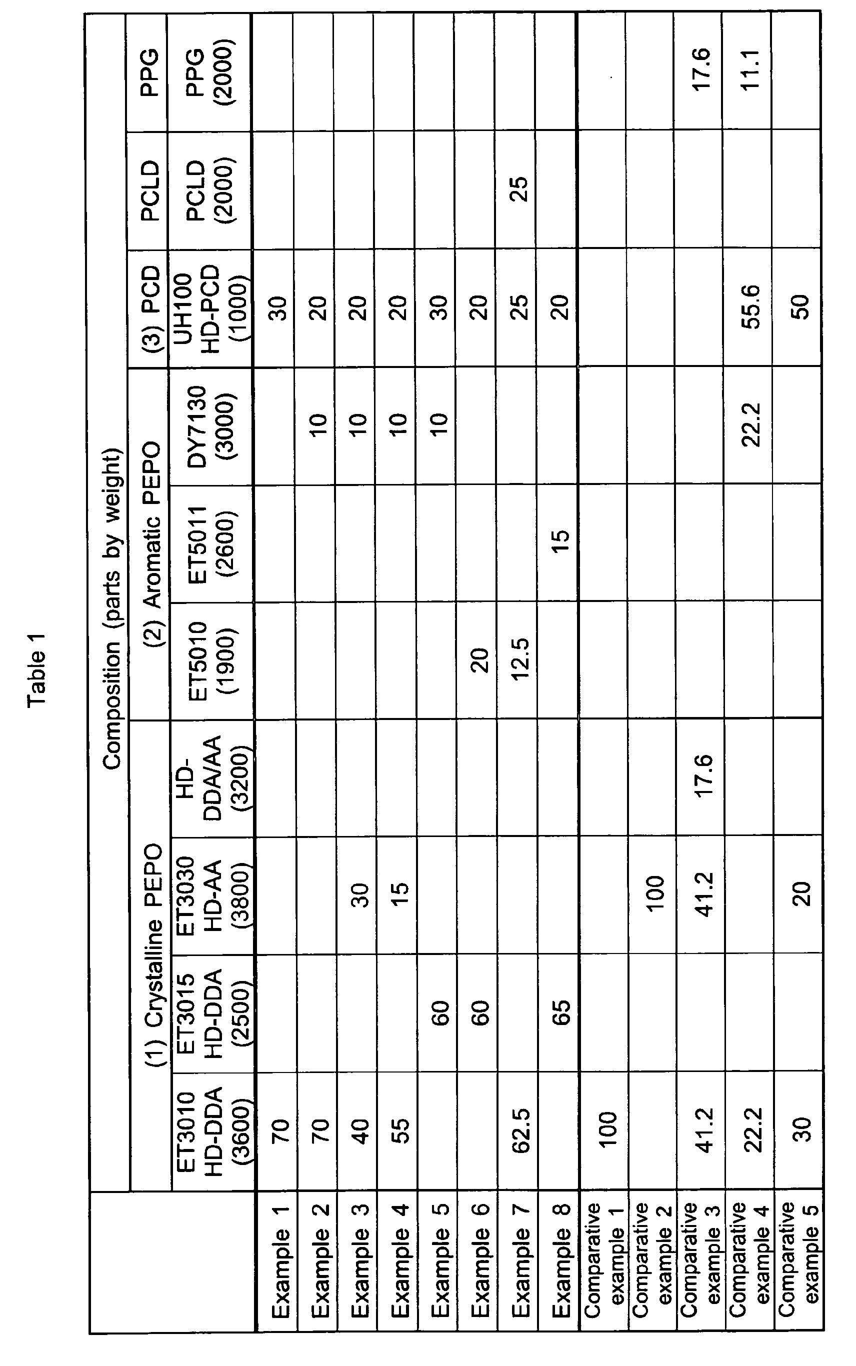

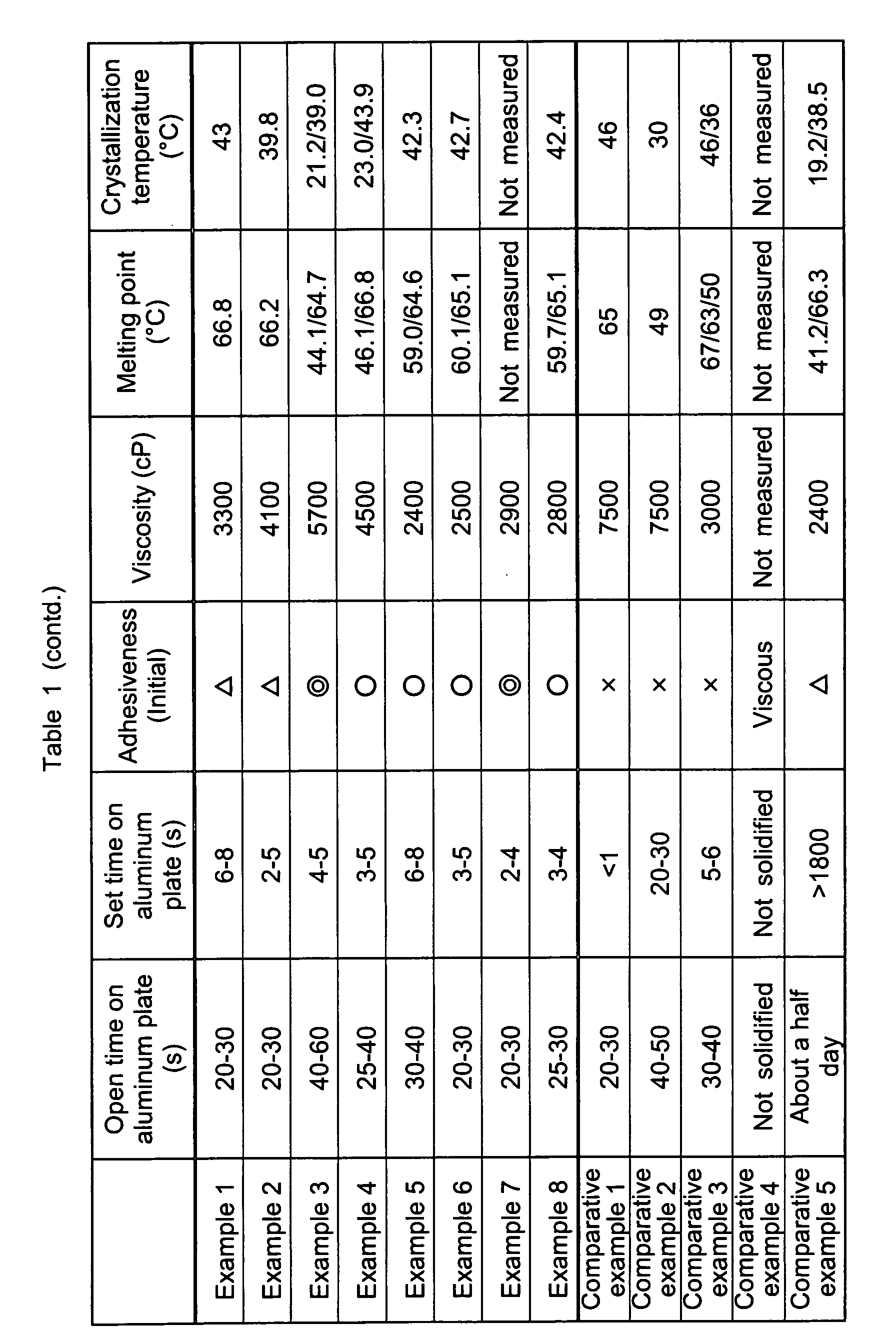

Incidentally, the symbols in the table mean the following.
(1) Crystalline PEPO: crystalline polyester polyol
(2) Aromatic PEPO: aromatic polyester polyol
(3) PCD: polycarbonate diol
PCLD: polycaprolactone diol
PPG: polypropylene glycol
HD: 1,6-hexanediol
DDA: dodecanedioic acid
AA: adipic acid
ET3010: ETERNACOLL 3010 available from Ube Industries, Ltd. [trade name, HD-DDA series polyester polyol: average molecular weight 3600, hydroxyl group value 30.9, acid value 0.16, melting point 70.4°C, crystallization temperature 57.3°C, crystallinity 49%]
ET3015: ETERNACOLL 3015 available from Ube Industries, Ltd. [trade name, HD-DDA series polyester polyol: average molecular weight 2500, hydroxyl group value 45.0, acid value 0.08, melting point 70.8°C, crystallization temperature 54.5°C, crystallinity 43%]
ET3030: ETERNACOLL 3030 available from Ube Industries, Ltd. [trade name, HD-AA series polyester polyol: average molecular weight 3800, hydroxyl group value 29.0, acid value 0.20, melting point 57.3°C, crystallization temperature 40.4°C, crystallinity 43%]
HD-(DDA/AA): [DDA/AA:40/60: average molecular weight 3200, hydroxyl group value 32.2, acid value 0.21, melting point 56.3°C, crystallization temperature 37.0°C, crystallinity 40%]
ET5010: ETERNACOLL 5010 available from Ube Industries, Ltd. [trade name, EG/NPG-AA/PA series polyester polyol: average molecular weight 1900, hydroxyl group value 58.2, acid value 0.10, Tg -0.2°C]
ET5011: ETERNACOLL 5011 available from Ube Industries, Ltd. [trade name, EG/NPG-AA/PA series polyester polyol: average molecular weight 2600, hydroxyl group value 43.8, acid value 0.10, Tg -0.5°C]
DY7130: DYNACOLL 7130 available from Degussa-Huls AG [trade name, average molecular weight 3000, hydroxyl group value 34.6, acid value <2, Tg 23.6°C]
UH-100: UH-CARB100 available from Ube Industries, Ltd. [trade name, HD series polycarbonate diol: average molecular weight 1000, hydroxyl group value 112.1, acid value 0.02, melting point 45.9°C]
PCLD(2000): TONE^{(™)} POLYOL 2241 available from DOW CHEMICALS [trade name, polycaprolactone diol: average molecular weight 2000, melting point 67.7°C, crystallization temperature 47.5°C]
PPG(2000): available from Wako Junyaku K.K. [polypropylene glycol diol type: average molecular weight 2000]
EG: ethylene glycol
NPG: neopentyl glycol
PA: phthalic acid

As can be clearly seen from the results of Examples and Comparative examples, it can be understood that the reactive hot melt compositions of the present invention have excellent adhesive property with an aluminum plate.

An integrated battery molded product produced by inserting an aluminum battery case and a print wiring board by using the reactive hot melt composition

### Example 9

By using the reactive hot melt composition of Example 8, an integrated battery molded product was produced by inserting an aluminum battery case and a print wiring board as mentioned below.
1. A reactive hot melt composition was charged in a gear pump type applicator, and melted at 110°C. Temperature setting of the applicator was 110°C at a tank, 110°C at a hose, and 110°C at a nozzle.
2. The mold was opened, and an aluminum battery case and a printed wiring board in which wiring has previously been made were provided in the mold.
3. The mold was closed so that no pressure leakage occurs.
4. The nozzle of the applicator was moved to an injection channel of the mold, and connected so as to not causing pressure leakage.
5. The reactive hot melt composition was injected under the following conditions.
   Processing temperature: 110°C, Injection pressure: 1.4MPa, Injection time: 5 seconds
6. The nozzle of the applicator was taken away from the mold.
7. The molded product was maintained in the mold for one minutes and cooled.
8. The mold was open to taken out the molded product.
9. Spoor of the molded product was removed.
10. The molded product was cured at room temperature by moisture in the air.
   This molded product did not have peeling or crack.

### Utilizable field in industry

According to the present invention, it can be realized to provide a polyol mixture which is a precursor of a reactive hot melt composition excellent in adhesive property to a metal, particularly to aluminum and a reactive hot melt composition obtained by said mixture, and a molded product using the composition. In particular, it can be used for the uses of electric and electronic constitutional parts or semiconductor parts.

## Claims

1. A polyol mixture containing
(1) 10 to 97% by weight of a crystalline polyester polyol produced by an aliphatic dicarboxylic acid and an aliphatic diol as main components,
(2) 0 to 45% by weight of a polyester polyol produced by an aromatic polycarboxylic acid and an aliphatic polyol as main components, and
(3) 3 to 45% by weight of a polycarbonate polyol.

2. The polyol mixture according to Claim 1, wherein (1) the crystalline polyester polyol produced by the aliphatic dicarboxylic acid and the aliphatic diol as main components has a crystallinity of 30% or more, when the polyester polyol is cooled and solidified from a melting state with a cooling rate of 10°C/min and the crystallinity of which was measured by X-ray diffraction method (Ruland method).

3. The polyol mixture according to Claim 1, wherein (1) the crystalline polyester polyol is a diol comprising the aliphatic dicarboxylic acid is a dicarboxylic acid having 6 to 12 carbon atoms, and the aliphatic diol is a diol having 2 to 12 carbon atoms,
(2) the polyester polyol is a polyol comprising the aromatic polycarboxylic acid which is at least one compound selected from the group consisting of phthalic acid, terephthalic acid and isophthalic acid, and the aliphatic polyol is a polyol having 2 to 12 carbon atoms.

4. The polyol mixture according to Claim 3, wherein (1) the aliphatic dicarboxylic acid is at least one selected from dodecanedioic acid and adipic acid, and the aliphatic diol is 1,6-hexanediol.

5. The polyol mixture according to Claim 4, wherein (2) the aromatic polycarboxylic acid is phthalic acid and adipic acid, and the aliphatic polyol is a polyester polyol of ethylene glycol and neopentyl glycol.

6. The polyol mixture according to Claim 5, wherein (3) the polycarbonate polyol is a compound containing 1,6-hexanediol.

7. The polyol mixture according to Claim 1, wherein the mixture contains
(1) 30 to 90% by weight of a crystalline polyester polyol produced by an aliphatic dicarboxylic acid and an aliphatic diol as main components,
(2) 5 to 30% by weight of a polyester polyol produced by an aromatic polycarboxylic acid and an aliphatic polyol as main components,
(3) 5 to 40% by weight of a polycarbonate.

8. A reactive hot melt composition obtained by reacting the polyol mixture and the polyisocyanate according to any one of Claims 1 to 7.

9. A molded product using the reactive hot melt composition according to Claim 8.

10. A molded product which is obtained by injecting the reactive hot melt composition according to Claim 8 into a closed mold, cooling the same, taken out from the mold, and then, cured by moisture in the air.

11. A molded product according to Claim 10, wherein the product can be obtained by providing an inserting material in the closed mold and integrally molded.

12. A molded product according to any one of Claims 9 to 11, wherein the product is a product in the fields of an electric and electronic parts producing industry, and a semiconductor parts producing industry.

13. A molded product according to Claim 11, wherein the inserting material is an electric or electronic constitutional part or a semiconductor constitutional part.

14. A molded product according to Claim 12 or 13, wherein the electric or electronic constitutional part or the semiconductor constitutional part is a sensor, a circuit board, an element, a switch, a wiring, a connector, a display device or a battery.
